Europäisches Patentamt

European Patent Office

Office européen des brevets

(19)

(11) Numéro de publication : **0 454 246 B1**

(12) **FASCICULE DE BREVET EUROPEEN**

(45) Date de publication du fascicule du brevet :
02.08.95 Bulletin 95/31

(51) Int. Cl.⁶ : **H04L 1/02,** H04J 3/06

(21) Numéro de dépôt : **91200949.5**

(22) Date de dépôt : **22.04.91**

(54) **Dispositif de mise en phase de signaux dans un système à doublement du conduit numérique.**

(30) Priorité : **27.04.90 FR 9005411**

(43) Date de publication de la demande :
**30.10.91 Bulletin 91/44**

(45) Mention de la délivrance du brevet :
**02.08.95 Bulletin 95/31**

(84) Etats contractants désignés :
**DE FR GB IT**

(56) Documents cités :
**EP-A- 0 137 563**
**DE-A- 3 107 802**
**IBM TECHNICAL DISCLOSURE BULLETIN,**
**vol. 7, no. 5, octobre 1964, page 371, NewYork,**
**US; W.E. CONNORS: "Error controlled diver-**
**sity combiner"**

(73) Titulaire : **T.R.T. TELECOMMUNICATIONS**
**RADIOELECTRIQUES ET TELEPHONIQUES**
**88, rue Brillat Savarin**
**F-75013 Paris (FR)**
(84) **FR**
Titulaire : **Philips Electronics N.V.**
**Groenewoudseweg 1**
**NL-5621 BA Eindhoven (NL)**
(84) **DE GB IT**

(72) Inventeur : **Bonnet, Jean-Marc**
**Société Civile S.P.I.D.,**
**156, Boulevard Haussmann**
**F-75008 Paris (FR)**
Inventeur : **Auclair, Jean-Yves**
**Société Civile S.P.I.D.,**
**156, Boulevard Haussmann**
**F-75008 Paris (FR)**

(74) Mandataire : **Pyronnet, Jacques et al**
**Société Civile S.P.I.D.**
**156, Boulevard Haussmann**
**F-75008 Paris (FR)**

## Description

L'invention concerne un dispositif de mise en phase de signaux sur deux canaux numériques porteurs chacun d'une trame, respectivement TRA et TRB, ces trames véhiculant la même information mais étant affectées par des retards différents, dans un système de transmission numérique synchrone par blocs d'information, comportant, pour chaque canal un moyen de verrouillage trame qui fournit un signal de synchronisation, à partir d'un signal de supertrame à basse fréquence et un moyen de retard variable commandé à partir dudit signal de synchronisation par un comparateur de phase suivi d'un organe de commande.

Tout système de transmission numérique peut être perturbé par un grand nombre de causes, telles l'imperfection du milieu de transmission (faisceau hertzien par exemple), la présence de bruit sur le canal de transmission, le parasitage radioélectrique ou les pannes. Ces perturbations se traduisent, du point de vue de l'utilisateur, par un taux d'erreurs sur le débit numérique utilisé et par des périodes de coupure, ce qui constitue un problème technique général. Lorsque le coût du débit numérique n'est pas trop élevé, dans les réseaux de communication terrestres notamment, une solution simple connue pour atténuer le problème technique général précité, consiste à dupliquer le signal à transmettre, à le transmettre par deux canaux séparés et à choisir le meilleur des deux signaux à la réception. La présente invention se place dans ce contexte de doublement du conduit numérique, situation dans laquelle peut se poser le problème particulier de la remise en phase des deux signaux reçus. Cette remise en phase permet, entre autres applications, la commutation d'un signal sur l'autre sans provoquer d'erreurs par perte d'horloge de trame, et... Dans ces conditions, il devient possible de passer d'un signal de trame TRA à un signal de trame TRB aussi souvent qu'il est nécessaire, en fonction des erreurs respectives dans chaque trame, sans risquer de dégrader la transmission, et d'exploiter le maximum de période de temps, sans erreur, de chaque conduit numérique.

Pour remettre en phase des signaux sur deux conduits numériques porteurs de la même information il est connu, notamment du brevet US-A 4 218 654, d'établir une bouche de contreréaction entre la sortie et l'entrée de commande d'un circuit de retard variable inséré dans un premier canal d'information, un circuit de commande, qui reçoit par ailleurs la même information présente sur un deuxième canal étant interposé dans la bouche. Une telle disposition est tributaire des inconvénients inhérents à tout asservissement, qui sont la complexité de mise en oeuvre et la lenteur.

L'invention a pour but d'effectuer une remise en phase de signaux de deux trames numériques précise simple et rapide en prélevant les signaux de synchronisation des trames en amont des moyens de retard variable.

Un autre but de l'invention est d'effectuer une remise en phase de deux signaux numériques en utilisant des moyens de retard variable qui permettent en outre l'introduction simultanée d'un retard fixe additionnel de valeur prédéterminée sur les deux signaux.

Ces buts sont atteints et les inconvénients de l'art antérieur sont atténués grâce au fait que le dispositif de mise en phase de signaux défini en préambule est remarquable en ce que lesdits moyens de retard variable sont constitués par une mémoire double commune à adressage cyclique dont chaque emplacement contient un bloc de la trame TRA et un bloc de la trame TRB ayant même rang dans la trame, l'adressage étant effectué en écriture par deux compteurs d'écriture séparés, calé chacun sur chaque signal de synchronisation et, en lecture, à partir d'un compteur de lecture de chaque emplacement qui fait partie dudit organe de commande, en ce que lesdits moyens de verrouillage trame sont connectés à l'entrée du dispositif, en amont de ladite mémoire double et en ce que ledit comparateur de phase est conçu pour sélectionner parmi les deux signaux de synchronisation celui qui est le plus en retard et pour le transmettre audit organe de commande, les signaux d'information TRA' issu de la trame TRA et TRB' issu de la trame TRB en sortie de ladite mémoire double étant rigoureusement synchrones.

Le dispositif selon l'invention est conçu pour fonctionner dans un environnement synchrone où seuls interviennent les problèmes de gigue du signal d'horloge que l'invention prend en compte. Ceci permet de s'affranchir d'une bouche d'asservissement, complexe et lente.

L'utilisation d'une mémoire double à adressage cyclique comme moyen de retard variable commun offre plusieurs avantages. La durée du cycle d'adressage de cette mémoire étant proportionnée à la période du signal de super trame il est ainsi possible d'inscrire dans chaque emplacement double de la mémoire, à des instants différents, des blocs de même rang de la trame TRA et de la trame TRB. De plus, la lecture de chaque emplacement ainsi inscrit permet d'obtenir en sortie du dispositif un synchronisme parfait pour les deux trames affectées de retards variables différents à travers la mémoire. Pour un bon fonctionnement du dispositif, il est nécessaire que la lecture de la mémoire s'effectue toujours après l'inscription du signal le plus tardif, problème technique annexe que résout l'invention.

Selon un mode de réalisation préféré qui réduit à un minimum la capacité de la mémoire double et permet d'assurer un retard minimum pour les signaux de trame entre l'entrée et la sortie du dispositif, la durée du cycle d'adressage de la mémoire double est égal à une demi période du signal de super trame.

Selon un autre mode de réalisation préféré de l'invention, le dispositif de signaux est remarquable en ce que ledit organe de commande qui comporte ledit compteur de lecture comporte en outre un détecteur de coïncidence conçu pour comparer un signal de synchronisation de lecture qu'il reçoit dudit compteur de lecture avec ledit signal de synchronisation le plus en retard et pour fournir au compteur de lecture un signal de rechargement à une valeur décalée d'un nombre prédéterminé M en deçà de la valeur de chargement la plus faible des deux compteurs d'écriture lorsque le décalage temporel entre les deux signaux qu'il reçoit dépasse un seuil prédéterminé proportionné à la gigue de phase, de l'ordre de quelques dizaines de bits. Dans cette version du dispositif, la lecture de la mémoire s'effectue avec un retard fixe après l'inscription en mémoire du signal le plus tardif.

Une application préférée du dispositif selon l'invention qui concerne le masquage d'erreurs de transmission est remarquable en ce que le dispositif comporte en outre un commutateur qui reçoit lesdits signaux d'information TRA' et TRB' synchronisés, respectivement issus des trames TRA et TRB, ledit commutateur étant commandé à partir de détecteurs d'erreurs connectés à l'entrée dudit dispositif de mise en phase, en amont de ladite mémoire double, et de moyens de commutation qui sont conçus pour commuter ledit commutateur sur la trame d'entrée la moins erronée, et en ce que ledit nombre prédéterminé M implique dans ladite mémoire double un retard fixe TF supérieur au temps nécessaire pour la détection d'erreurs dans les trames TRA ou TRB par lesdits détecteurs d'erreurs.

Ainsi, si il est possible de détecter rapidement les erreurs dans le signal reçu et si les deux canaux ne sont pas perturbés en même temps, on peut commuter le signal restitué sur le canal non perturbé avant que la perturbation ne soit transmise.

La description qui suit en regard des dessins annexés le tout donné à titre d'exemple non limitatif, fera bien comprendre comment l'invention peut être réalisée.

La figure 1 est un schéma synoptique du dispositif de mise en phase de signaux selon l'invention.

Les figures 2a et 2b sont des diagrammes de temps circulaires illustrant l'adressage cyclique de la mémoire double de la figure 1.

La figure 3 représente sous forme schématique le comparateur de phase de la figure 1.

La figure 4 représente le schéma électronique d'un mode de réalisation de la machine à états de la figure 3.

Les figures 5a et 5b qui sont des diagrammes de temps des signaux de synchronisation SYA et SYB et la figure 5c qui est un diagramme d'états, permettent d'expliciter le fonctionnement de la machine à états de la figure 4.

La figure 6 est un diagramme de temps illustrant le fonctionnement interne de l'organe de commande de la figure 1.

La figure 7 est le schéma synoptique du dispositif de mise en phase selon l'invention appliqué au masquage d'erreurs de transmissions.

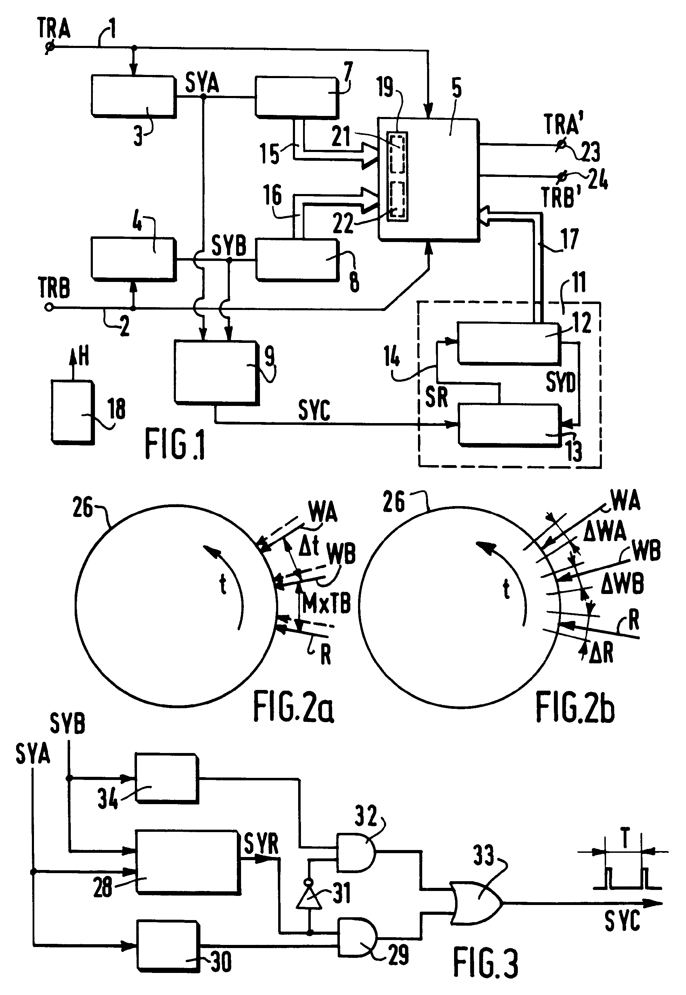

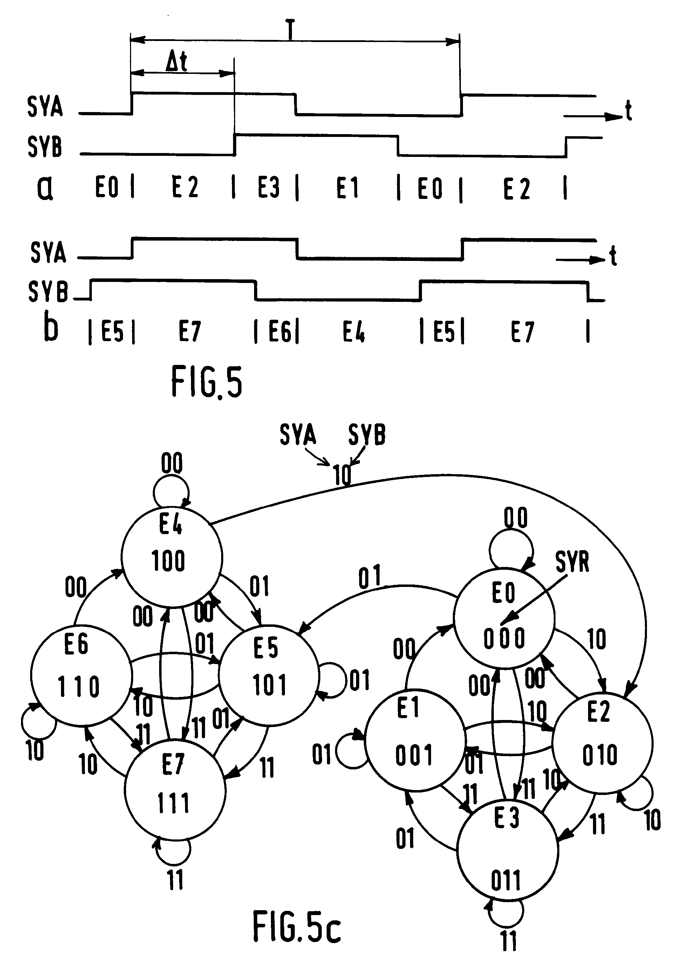

A la figure 1 on a représenté deux canaux (ou conduits) numériques 1 et 2 qui portent respectivement les signaux de trame TRA et TRB porteurs de la même information mais affectés de retards différents. Il s'agit par exemple, pour fixer les idées d'un système de transmission téléphonique à répartition dans le temps à 2048 kbits/s, chaque trame comportant 32 voies téléphoniques, a raison d'un échantillon codé sur 8 bits pour chaque voie, soit des trames de 256 bits. Le déphasage maximal envisagé entre les signaux TRA et TRB est grand et peut atteindre plusieurs centaines de trames. Dans l'exemple numérique envisagé, ce déphasage maximal est par exemple égal à 256 trames, soit 65536 bits.

De façon connue, le signal de trame comporte, à intervalles réguliers dans le temps, des bits libres qui peuvent être utilisés en particulier pour des récupérations de rythmes. L'invention utilise l'un de ces bits pour créer un signal de supertrame à basse fréquence dont la période T est au moins égale au double du déphasage maximal exprimé en temps de bit (TBI). Dans la trame à 2048 kbits/s précitée, la fréquence du signal de supertrame est par exemple égale à 15 Hz.

Chaque signal TRA, TRB est fourni d'une part à un moyen de verrouillage trame séparée 3, 4 et à des moyens de retard variable communs 5 constitués par une mémoire double. De préférence, la mémoire 5 est une mémoire circulaire du type RAM statique à double accès.

Chaque moyen de verrouillage trame 3, 4 de conception classique, est conçu pour détecter, dans le signal de trame, le motif de la supertrame à basse fréquence, pour se caler sur ce motif et fournir un signal de synchronisation de trame SYA, SYB sous forme d'un signal carré de période T. Chaque signal SYA, SYB est fourni à un compteur 7, 8 et par ailleurs, ces deux signaux sont aussi fournis à un comparateur de phase 9. Pour compléter le schéma, le comparateur de phase 9 fournit un signal impulsionnel SYC de période T à un organe de commande 11 qui se décompose en un compteur de lecture 12 et un détecteur de coïncidence 13, ce dernier recevant le signal SYC et un signal de synchronisation SYD de période T en provenance du compteur 12 et fournissant, en cas de non coïncidence de phase de ces deux signaux, un signal de rechargement SR, sur un conducteur 14, au compteur 12. Les compteurs 7, 8, respectivement 12, qui sont des compteurs cycliques sont utilisés pour l'adressage en écriture, respectivement en lecture, de la mémoire 5, au moyen de bus d'adresses 15, 16 pour l'écriture, et d'un bus 17 pour la lecture. Un générateur d'horloge 18 fournit un signal d'horloge H à la fréquence des bits de données (de période TBI) à tous les circuits de la figure 1 (la liaison avec ces circuits étant omise intentionnellement pour ne pas surcharger le dessin). Dans la mémoire 5 le signal d'horloge H ou, de préférence, un signal dérivé H′ à la fréquence 1/TBL des octets ou des trames qui représentent des blocs de données est utilisé pour l'écriture et la lecture des blocs de données. Chaque compteur d'écriture 7, 8, est calé sur le signal de synchronisation SYA, SYB, son MSB (par exemple le poids 16) étant activé à la fréquence 1/T et son LSB à la fréquence des bits de données (signal H). On peut, pour l'adressage en écriture et en lecture, utiliser tous les bits significatifs des compteurs tels que définis ci-dessus, auquel cas la capacité de la mémoire 5 est égale au nombre de bits de données contenus dans une période T du signal de supertrame. Avantageusement, le MSB n'est pas utilisé pour l'adressage, ce qui permet de réduire la capacité de la mémoire 5 à la moitié de celle indiquée à la phase précédente. Chaque emplacement 19 de la mémoire est double et contient, juste avant d'être lu, un bloc de TRA et un bloc de TRB, ces deux blocs ayant même rang dans la période définie par des signaux de supertrame qui se correspondent dans TRA et TRB, ces deux blocs étant donc porteurs de la même information aux erreurs de transmission près. La lecture de chaque emplacement mémoire fournit, sur deux bornes de sortie 23, 24, des signaux de trame TRA′, TRB′, rigoureusement synchrones.

Sur les figures 2a et 2b on a représenté l'adressage de la mémoire 5 sous la forme d'un cercle 26 sur lequel, à un instant donné $t_o$ commandé par le signal H′, les emplacements d'écriture sont pointés sur le cercle 26 par les flèches référencées WA, WB pour l'inscription respective de blocs différents des trames TRA et TRB, séparés par une durée $\Delta t$ représentative du déphasage à compenser. A l'instant $t_o$, la lecture est représentée par la flèche R, décalée par rapport à l'inscription du signal de données le plus en retard d'un nombre prédéterminé de blocs M x TBL (signal TRB en l'occurrence). Le nombre M est choisi le plus faible possible lorsque l'application envisagée par le dispositif ne prévoit pas l'introduction d'un retard fixe à travers la mémoire 5. La valeur minimale de M est dépendante de la précision mutuelle entre les instants d'écriture et de lecture que procure le système, précision qui est liée à la gigue de phase. Sur la figure 2b sont représentées des plages temporelles d'incertitude $\Delta WA$, $\Delta WB$ pour l'écriture et $\Delta R$ pour la lecture. Dans ces conditions, la valeur de M doit respecter la relation suivante :

$$M \times TBL > \frac{\Delta WB + \Delta R}{2}$$

Sur la figure 2a, le cycle d'écriture et de lecture suivant est représenté par des flèches en trait interrompu respectivement proches des flèches en trait plein et homologues de ces dernières.

La suite de la description vise pour l'essentiel à décrire comment il est possible de réaliser le retard M x TBL de la lecture par rapport à l'écriture du signal le plus en retard parmi les signaux de données TRA et TRB.

Un mode de réalisation du comparateur de phase 9 est maintenant décrit en référence aux figures 3, 4 et 5.

Le comparateur de phase représenté à la figure 3 comporte une machine à états 28 qui reçoit les signaux de synchronisation SYA et SYB et fournit un signal logique SYR qui porte la valeur "0" lorsque SYB est en retard sur SYA (voir la figure 5a) et la valeur "1" dans le cas contraire (voir la figure 5b). Le signal SYR agit comme un signal de commande de commutateur. A cet effet, il est par exemple transmis à une entrée d'un circuit-porte logique ET 29 qui reçoit sur une deuxième entrée le signal SYA après transformation en signal impulsionnel par circuit 30 et, par l'intermédiaire d'un inverseur 31 à une entrée d'un circuit ET 32 qui reçoit par ailleurs le signal SYB après transformation en signal impulsionnel par circuit 34. Les sorties des circuits ET 29 et 32 sont reliées aux entrées d'un circuit OU 33 dont la sortie fournit un signal impulsionnel SYC. Ainsi, lorsque SYB est le plus en retard des deux signaux de synchronisation, ce signal SYB est transmis sous forme d'impulsions et dans le cas contraire, c'est le signal SYA qui est transmis sous forme d'impulsions.

Le circuit 30, respectivement 34 transforme le signal carré SYA, respectivement SYB en un signal impulsionnel par action monostable sur le front montant ou, de préférence, sur le front descendant du signal carré qu'il reçoit.

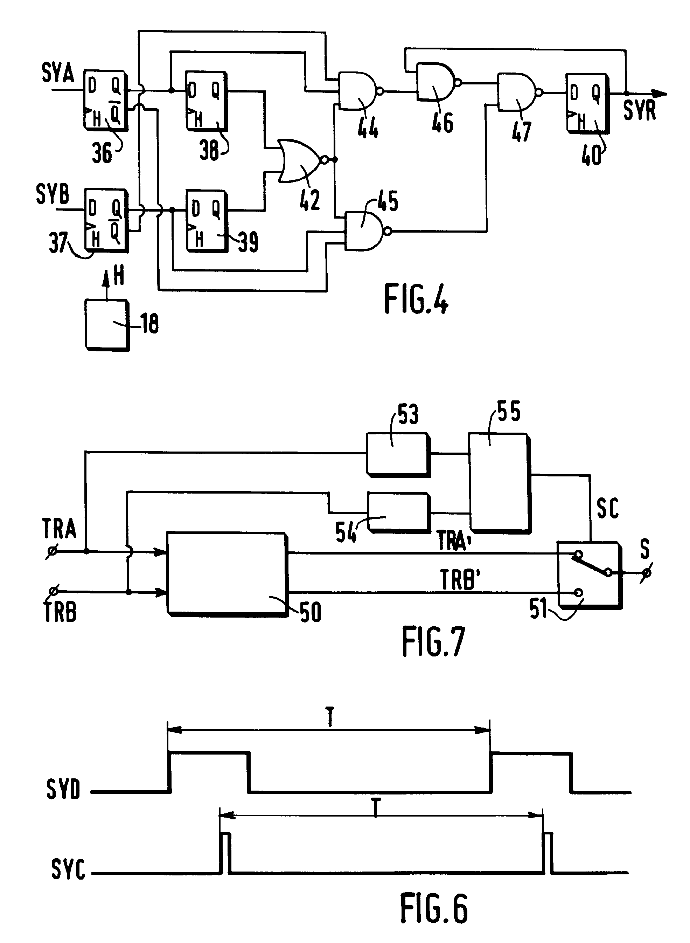

La machine à états 28 de la figure 3 peut être réalisée au moyen du circuit de la figure 4 qui est constitué de cinq bascules D, 36 à 40, d'un circuit NON-OU (NOR) 42 et de quatre circuits NON-ET (NAND) 44, 45, 46, 47. Toutes les bascules reçoivent le signal H sur leur entrée d'horloge. La bascule 36 reçoit le signal SYA sur son entrée D, sa sortie Q est reliée à l'entrée D de la bascule 38 et à une entrée du NAND 44, et sa sortie $\overline{Q}$ est reliée à une entrée du NAND 45. De façon symétrique, la bascule 37 reçoit le signal SYB sur son entrée D, sa sortie Q est reliée à l'entrée D de la bascule 39 et à une autre entrée du NAND 45 et sa sortie $\overline{Q}$ à une autre entrée du NAND 44. La sortie Q des bascules 38 et 39 est, chacune, reliée à une entrée du NOR 42 dont la sortie est reliée à une autre entrée des NAND 44 et 45 respectivement. Les NAND 46, 47 et la bascule 40 sont reliés en chaîne, dans cet ordre entre la sortie du NAND 44 et la sortie de la machine à états porteuse du signal SYR, et qui s'identifie à la sortie Q de la bascule 40, cette sortie étant par ailleurs rebouclée sur une autre entrée du NAND 46 et la sortie du NAND 45 étant reliée à une autre entrée du NAND 47.

Le circuit qui vient d'être décrit réalise le diagramme d'états représenté sur la figure 5c qui se lit en liaison avec les figures 5a et 5b. Sur la figure 5a, le signal SYB est représenté en retard (retard au maximum égal à $\pi$) par rapport au signal SYA, ce qui correspond à la valeur SYR = 0 (voir la partie droite de la figure 5c) et aux couples d'états suivants pour SYA et SYB :

E0 = 00, E2 = 10, E3 = 11, E1 = 01

Sur la figure 5b, le signal SYA est le plus en retard, ce qui correspond à : SYR = 1 (partie gauche de la figure 5c) et aux couples d'états suivants pour SYA et SYB :

E5 = 01, E7 = 11, E6 = 10, E4 = 00.

Dans l'organe de commande de lecture 11 (voir figure 1), le détecteur de coïncidence 13 reçoit le signal SYC, et le signal SYD en provenance du compteur de lecture 12, signaux qui sont représentés à la figure 6. Le signal SYD qui est synchronisé sur le cycle de comptage du compteur de lecture avec un retard prédéterminé voisin de la durée M x TBL (voir figure 2a), a un rapport cyclique faible, très inférieur à 0,5 et se présente sous la forme d'un signal impulsionnel de même période (T) que SYC mais dont la durée d'impulsion est plus large que celle de SYC. Lorsque l'impulsion de SYC se produit pendant la durée d'impulsion de SYD comme représenté sur la figure 6, le dispositif de mise en phase fonctionne de façon nominale comme déjà décrit en référence aux figures 2a et 2b. La différence de largeur d'impulsion est réglée de façon à pouvoir absorber la gigue maximale ( de l'ordre de quelques dizaines de bits) qui peut se produire entre le signal d'horloge H et les différents signaux présents dans le dispositif, en particulier entre les signaux SYC et SYD. Si par contre les impulsions de SYC et SYD ne coïncident pas dans le temps comme c'est le cas par exemple lors de la mise sous tension, un signal de rechargement SR sous la forme d'un signal logique "1" ou "O" est transmis à l'entrée de remise à l'état initial (RESET) du compteur 12, ce qui a pour effet de recaler l'impulsion de SYD sur celle de SYC et, simultanément, de rétabli le comptage des adresses de lecture à leur valeur nominale (figure 2a) étant entendu que le compteur est conçu, par construction, pour fournir le décalage optimal entre adresses de lecture et d'écriture lorsque les signaux SYC et SYD sont, en substance, en phase. La conception et l'agencement des circuits 12 et 13, et de la mémoire 5 pour réaliser les fonctions simples décrites ci-dessus sont à la portée de l'homme du métier.

Par simple calage relatif préalable entre le cycle de lecture et l'émission du signal SYD il est ainsi possible de régler la valeur de M d'une valeur minimale juste nécessaire à la remise en phase précise des signaux TRA, TRB sous la forme des signaux synchrones TRA', TRB', jusqu'à une valeur qui ajoute un retard fixe TF supplémentaire des signaux TRA', TRB' par rapport aux signaux TRA, TRB et ceci sans rien changer à la structure ni au fonctionnement du dispositif de la figure 1, cette fonction de retardement supplémentaire pouvant s'avérer utile pour certaines applications, comme par exemple l'application décrite ci-dessous avec référence à la figure 7.

A la figure 7 on a représenté en 50 le dispositif de la figure 1, qui reçoit sur ses deux entrées les signaux respectifs TRA et TRB et fournit les signaux TRA' et TRB' aux bornes de choix d'un commutateur 51 dont la sortie est le siège d'un signal S qui est soit le signal TRA' (comme représenté sur la figure), soit le signal TRB' selon la position du commutateur actionné par un signal SC sur une entrée de commande. Le dispositif de la figure 7 est destiné au masquage d'erreurs de transmission.

A cet effet, il comporte des détecteurs d'erreurs 53, 54, dont les entrées sont reliées respectivement aux deux entrées du dispositif 50 et qui fournissent des signaux d'erreur éventuels respectifs à des moyens de commutation 55. Les moyens de commutation 55 sont conçus pour comparer les qualités relatives des signaux de trame TRA et TRB qu'il reçoit et, pour émettre le signal de commande SC sous la forme d'un signal logique 0 ou 1 tel que, à tout instant, la position du commutateur 51 provoque, en sortie de ce dernier, la fourniture du meilleur parmi les deux signaux de trame TRA' ou TRB'. Les circuits 53, 54 et 55 sont bien connus de l'homme de métier et ne nécessitent pas de description détaillée.

La commutation à tout instant du commutateur 51 est possible grâce à la synchronisation parfaite des deux signaux TRA' et TRB' et s'effectue donc sans perte d'information qui serait due à la commutation elle-même. Par ailleurs, dans cette application de l'invention, le nombre M est réglé, en 50, de façon à introduire un retard fixe TF supérieur au temps nécessaire pour la détection des erreurs à travers les détecteurs d'erreurs 53 et 54 augmenté du temps nécessité par la comparaison des erreurs en 55.

En ce qui concerne la technologie utilisée pour la réalisation du dispositif de la figure 1 on peut par exemple utiliser comme mémoire 5 une mémoire RAM statique de 256 kbits et intégrer les autres éléments 3, 4, 7, 8, 9, 12, 13 et 18 sous la forme d'un circuit intégré unique.

**Revendications**

1. Dispositif de mise en phase de signaux sur deux canaux numériques (1,2) porteurs chacun d'une trame TRA, respectivement TRB, ces trames véhiculant la même information mais étant affectées par des retards différents, dans un système de transmission numérique synchrone par blocs d'information, comportant, pour chaque canal un moyen de verrouillage trame (3,4) qui fournit un signal de synchronisation (SYA,SYB), à partir d'un signal de supertrame à basse fréquence et un moyen de retard variable (5) commandé à partir dudit signal de synchronisation par un comparateur de phase (9) suivi d'un organe de commande (11), caractérisé en ce que lesdits moyens de retard variable (5) sont constitués par une mémoire double commune à adressage cyclique (19) dont chaque emplacement contient un bloc de la trame TRA (21) et un bloc de la trame TRB (22) ayant même rang dans la trame, l'adressage étant effectué en écriture par deux compteurs d'écriture séparés (7,8), calé chacun sur chaque signal de synchronisation (SYA,SYB) et, en lecture, à partir d'un compteur de lecture (12) de chaque emplacement qui fait partie dudit organe de commande (11), en ce que lesdits moyens de verrouillage trame (3,4) sont connectés à l'entrée du dispositif, en amont de ladite mémoire double (19) et en ce que ledit comparateur de phase (9) est conçu pour sélectionner parmi les deux signaux de synchronisation celui qui est le plus en retard et pour le transmettre audit organe de commande (11), les signaux d'information TRA' issu de la trame TRA et TRB' issu de la trame TRB en sortie de ladite mémoire double étant rigoureusement synchrones.

2. Dispositif de mise en phase de signaux selon la revendication 1, caractérisé en ce que la durée du cycle d'adressage de ladite mémoire double est égal à une demi-période dudit signal de supertrame.

3. Dispositif de mise en phase de signaux selon la revendication 1 ou 2, caractérisé en ce que ladite mémoire double est du type RAM statique à double accès.

4. Dispositif de mise en phase de signaux selon l'une des revendications 1 à 3, caractérisé en ce que ledit organe de commande (11) qui comporte ledit compteur de lecture (12) comporte en outre un détecteur de coïncidence (13) conçu pour comparer un signal de synchronisation de lecture qu'il reçoit dudit compteur de lecture avec ledit signal de synchronisation le plus en retard et pour fournir au compteur de lecture un signal de rechargement à une valeur décalée d'un nombre prédéterminé M en deçà de la valeur de chargement la plus faible des deux compteurs d'écriture lorsque le décalage temporel entre les deux signaux qu'il reçoit dépasse un seuil prédéterminé proportionné à la gigue de phase.

5. Dispositif de mise en phase de signaux selon les revendications 2, 3 et 4 prises ensemble, dans un système de transmission à 2048 kbits/s pour trames de 32 x 8 bits, caractérisé en ce que ledit signal de supertrame a une fréquence de 15 Hz.

6. Dispositif de mise en phase de signaux selon la revendication 5 caractérisé en ce que ladite mémoire double a une capacité de 256 kbits.

7. Application du dispositif de mise en phase de signaux selon l'une des revendications 4 à 6 au masquage d'erreurs de transmission, caractérisé en ce que le dispositif comporte en outre un commutateur (51) qui reçoit lesdits signaux d'information TRA' et TRB' synchronisés, respectivement issus des trames TRA et TRB, ledit commutateur (51) étant commandé à partir de détecteurs d'erreurs (53,54) connectés à l'entrée dudit dispositif de mise en phase, en amont de ladite mémoire double (19), et de moyens de commutation (55) qui sont conçus pour commuter ledit commutateur sur la trame d'entrée la moins erronée, et en ce que ledit nombre prédéterminé M implique dans ladite mémoire double (19) un retard fixe TF supérieur au temps nécessaire pour la détection d'erreurs dans les trames TRA ou TRB par lesdits détecteurs d'erreurs (53,54).

**Patentansprüche**

1. Schaltungsanordnung zur Phasenregelung von Signalen über zwei digitale Kanäle (1,2), die je einen Rahmen TRA oder TRB tragen, wobei diese Rahmen dieselbe Information befördern aber unterschiedlichen Verzögerungen ausgesetzt sind in einem synchronen digitalen Informationsblockübertragungssystem, wobei für jeden Kanal Rahmenverrieglungsmittel (3,4) vorgesehen sind, die ein Synchronsignal (SYA,SYB) erzeugen in Antwort auf ein niederfrequentes Superrahmensignal und mit Mitteln zur veränderlichen Verzögerung (5), die in Antwort auf das genannte Synchronsignal mittels einer Phasenvergleichsschaltung (9) mit einem nachfolgenden Steuerelement (11) gesteuert werden, dadurch gekennzeichnet, daß die Mittel zur veränderlichen Verzögerung (5) einen gemeinsamen doppelten Speicher aufweisen mit zyklischer Adressierung (19), wobei jede Speicherstelle einen Block des Rahmens TRA (21) und einen Block des Rahmens TRB (22) aufweist, welche dieselben Rangordnung innerhalb des Rahmens haben, wobei die Adressierung in der Schreibbetriebsart erfolgt durch zwei einzelne Schreibzähler (7,8), die je auf jedem Synchronsignal (SYA,SYB) verriegelt sind und in der Lesebetriebsart durch einen Lesezähler (12) für jede Speicherstelle, wobei dieser Zähler einen Teil des genannten Steuerelementes (11) bildet, daß das genannte Rahmenverriegelungsmittel (3,4) mit dem Eingang der Schaltungsanordnung verbunden ist und zwar vor dem genannten doppelten Speicher (19) und daß die genannte Phasenverriegelungsschaltung (9) aufgeteilt ist um dasjenige Synchronsignal aus den beiden Synchronsignalen zu wählen, daß mehr verzögert ist und um dieses Signal zu dem genannten Steuerelement (11) zu übertragen, wobei die Informationssignale TRA', die von dem Rahmen TRA herrühren und die Signale TRB', die von dem Rahmen TRB herrühren, absolut synchron sind und zwar am Ausgang des genannten Doppelspeichers.

2. Schaltungsanordnung zur Phasenregelung von Signalen nach Anspruch 1, <u>dadurch gekennzeichnet</u>, daß die Dauer des Adressierungszyklus des Doppelspeichers gleich der Hälfte einer Periode des Supperrahmensignals ist.

3. Schaltungsanordnung zur Phasenregelung nach Anspruch 1 oder 2, <u>dadurch gekennzeichnet</u>, daß der genannte Doppelspeicher 5 vom statischen RAM-Typ mit doppeltem Zugriff ist.

4. Schaltungsanordnung zur Phasenregelung nach einem der Ansprüche 1 bis 3, <u>dadurch gekennzeichnet</u>, daß das genannte Stuerelement (11), das den genannten Auslesezähler (12) enthält, ebenfalls einen Koinzidenzdetektor (13) aufweist, zum Vergleichen eines ausgelesenen Synchronsignals, das er von dem genannten Auslesezähler erhält, mit dem am meisten verzögerten Synchronsignal und zum Zuführen eines neugeladenen Signals zu dem Auslesezähler, welches Signal einen Wert hat, der um eine vorbestimmte Anzahl M gegenüber dem niedrigen Ladewert der zwei Schreibzähler verzögert ist, wenn die zeitabhängige Verschiebung zwischen den beiden Signalen, die er erhält um einen vorbestimmten Wert überschreitet, der angepaßt ist an das Phasenjitter.

5. Schaltungsanordnung zur Phasenregelung nach den Ansprüchen 2, 3 und 4 zusammen, in einem Übertragungssystem von 2048 kbit/s für Rahmen von 32 x 8 Bits, <u>dadurch gekennzeichnet</u>, daß die Frequenz des Superrahmensignals gleich 15 Hz beträgt.

6. Schaltungsanordnung zur Phasenregelung nach Anspruch 5, <u>dadurch gekennzeichnet</u>, daß der genannte Doppelspeicher eine Kapazität von 256 kBits hat.

7. Gebrauch der Schaltungsanordnung zur Phasenregelung nach einem der Ansprüche 4 bis 6 zur Maskierung von Übertragungsfehlern, <u>dadurch gekennzeichnet</u>, daß diese Schaltungsan

ordnung außerdem einen Umschalter enthält, der die genannten synchronisierten Informationssignale TRA' und TRB', herrührend von den betreffenden Rahmen TRA bzw. TRB, erhält, wobei dieser Umschalter (51) durch Fehlerdetektoren (53,54) gesteuert wird, die mit dem Eingang der genannten Phasenregelungsschaltung verbunden sind und zwar vor dem Doppelspeicher (19), und ein Umschaltmittel (55), das dazu vorgesehen ist, den Schalter umzuschalten zu dem am wenigsten gestörten Eingangsrahmen, und daß die vorbestimmte Anzahl M eine feste Verzögerung TF in dem Doppelspeicher (19) herbeiführt, wobei diese Verzögerung länger ist als die Periode erforderlich zur Fehlerdetektion in den Rahmen TRA oder TRB mit Hilfe der Fehlerdetektoren (53,54).

**Claims**

1. Signal phase correction arrangement in a synchronous digital information block transmission system for phasing signals over two digital channels (12) carrying respective frames TRA or TRB, these frames conveying the same information but being affected by different delays, the arrangement comprising for each channel a frame locking means (3, 4) which generates a synchronizing (sync) signal (SYA, SYB) in response to a low-frequency superframe signal and a variable delay means (5) controlled in response to said sync signal by means of a phase comparator (9) followed by a control element (11), characterized in that said variable delay means (5) comprises a common double memory with cyclic addressing (19) in which each location contains a block of frame TRA (21) and a block of frame TRB (22) which have the same rank within the frames, the addressing is effected in the write mode by two separate write counters (7, 8) each locked on to a sync signal (SYA,SYB) and, in the read mode, by a read counter (12) for each location, which counter forms part of said control element (11), in that said frame locking means (3, 4) is connected to the input of the arrangement, upstream of said double memory (19) and in that said phase comparator (9) is devised for selecting from the two sync signals the one that is the more delayed, and for transmitting this signal to said control element (11), the information signals TRA' coming from the frame TRA and TRB' coming from the frame TRB being absolutely synchronous at the output of said double memory.

2. Signal phase correction arrangement as claimed in Claim 1, characterized in that the duration of the addressing cycle of the double memory is equal to half a period of the superframe signal.

3. Signal phase correction arrangement as claimed in Claim 1 or 2, characterized in that said double memory is of the double access static RAM type.

4. Signal phase correction arrangement as claimed in one of the Claims 1 to 3, characterized in that said control element (11) which comprises the read counter (12) also includes a coincidence detector (13) devised for comparing a read sync signal it receives from the read counter with the more delayed sync signal and for feeding to the read counter a reload signal that has a value shifted by a predetermined number M relative to the lower load value of the two write counters when the time-dependent shift between the two signals it receives exceeds a predetermined value adapted to the phase jitter, of the order of several dozen bits.

5. Signal phase correction arrangement as claimed in one of the Claims 2, 3 and 4 taken as a whole, in a 2048 kbit/s transmission system for 32 x 8 bit frames, characterized in that said superframe signal has a frequency of 15 Hz.

6. Signal phase correction arrangement as claimed in Claim 5, characterized in that said double memory has a capacity of 256 kbits.

7. Application of the signal phase correction arrangement as claimed in one of the Claims 4 to 6 to the masking of transmission errors, characterized in that the arrangement further includes a change-over switch (51) which receives said information signals TRA' and TRB,' synchronized with or coming from the respective frames TRA and TRB, said change-over switch (51) being controlled by error detectors (53, 54) connected to the input of said phase correction arrangement upstream of the double memory (19), and a switching means (55) which is devised for switching said changeover switch to the least erroneous input frame, and in that said predetermined number M causes a fixed delay TF in the double memory (19), which delay is longer than the period of time necessary for error detection in the frames TRA or TRB with the aid of the error detectors (53, 54).

FIG.1

FIG.2a

FIG.2b

FIG.3

FIG.5

FIG.5c

FIG.4

FIG.7

FIG.6